# EUROPÄISCHE PATENTANMELDUNG

(11) **EP 1 701 015 A2**
(43) Veröffentlichungstag der Anmeldung: **13.09.2006**
(21) Anmeldenummer: 06004181.1
(22) Anmeldetag: 02.03.2006
(51) Int. Cl.: F02B 37/12

(54) **Ladedruckregler für Abgas-Turbolader von Brennkraftmotoren für Automobile**

(30) Priorität: 03.03.2005 DE 202005003975 U; 30.09.2005 DE 202005015598 U; 02.11.2005 DE 202005017296 U
(71) Anmelder: smk systeme metall kunststoff gmbh & co., 70794 Filderstadt-Plattenhardt (DE)
(72) Erfinder: Wortmann, Frank, 73765 Neuhausen (DE); Bahm, Klaus, 76703 Kraichtal/Menzingen (DE)
(74) Vertreter: Twelmeier, Ulrich

(57) **Zusammenfassung**

Die Erfindung betrifft einen Ladedruckregler für Abgas-Turbolader von Brennkraftmotoren für Automobile
- mit einer Dose (1), welche eine Umfangswand (2), einen Boden (3), einen Deckel (11) und eine zwischen dem Deckel (11) und der Dose (1) eingespannte flexible Membrane (19) aufweist, welche einer dem Boden (3) zugewandten Seite eines Membrantellers (23) anliegt, wobei die Dose (1) eine Achse (35) hat, welche von der Umfangswand (2) umgeben ist und den Deckel (11) und den Boden (3) durchquert,
- mit einem am Deckel (11) vorgesehenen Anschluß (34) für eine Druck- oder Unterdruckquelle, welcher in den Raum zwischen dem Deckel (11) und der Membrane (19) mündet,
- mit einer zwischen dem Deckel (11) und dem Membranteller (23) eingespannten Druckfeder (30),
- mit einem in der Mitte des Membrantellers (23) vorgesehenen ersten Loch (26),
- ggf. mit einem in der Mitte der Membrane (19) vorgesehenen zweiten Loch (21),
- mit einem in der Mitte des Bodens (3) der Dose (1) vorgesehenen dritten Loch (5),
- und mit einer Stange (31), welche sich in Richtung der Achse (35) erstreckt und deren eines Ende fest mit dem Membranteller (23) verbunden ist und zu diesem Zweck in dem ersten Loch (26) steckt und durch das dritte Loch (5) und ggf. durch das zweite Loch (21) aus der Dose (1) herausgeführt ist.

## Beschreibung

Die Erfindung geht aus von einem Ladedruckregler mit den im Oberbegriff des Anspruchs 1 angegebenen Merkmalen. Ein solcher Ladedruckregler ist durch Benutzung bekannt geworden. Ein Ladedruckregler ist ein pneumatischer Aktuator, der mit Unterdruck oder Überdruck beaufschlagt wird. Durch die Druckbeaufschlagung bewegt sich eine Stange, die auch als Regelstange bezeichnet wird, und betätigt ein Ventil, wozu relativ große Kräfte bis zu 350 N übertragen werden.

Der bekannte Ladedruckregler hat eine Dose aus Metall, welche eine Umfangswand, einen Boden, einen Deckel und eine zwischen dem Deckel und der Dose eingespannte flexible Membrane aufweist, welche durch einen metallischen Membranteller gestützt wird. An diesem Membranteller ist starr eine Stange befestigt, welche aus der Dose herausführt und mit ihrem außerhalb der Dose liegenden Ende das genannte Ventil betätigt. Unter den typischen Einsatzbedingungen im Automobil unterliegt der Ladedruckregler einer hohen Temperaturbelastung von -35°C bis +200°C, einer hohen Vibrationsbelastung und einer sehr hohen Impulsbelastung, die sich daraus ergibt, daß der Membranteller eine Totpunktlage hat, in welcher er am Boden der Dose anschlagen kann.

Zur Sicherstellung der Vibrations- und Impulsfestigkeit werden bei dem bekannten Ladedruckregler der Membranteller, die Membrane und die Regelstange auf relativ aufwendige Weise zusammengebaut: Dazu wird in eine Stange ein Außengewinde eingeschnitten, welches an einer Bundfläche der Stange endet. Dann werden im Falle eines mit Überdruck zu beaufschlagenden Ladedruckreglers aufeinanderfolgend eine erste Federscheibe, der Membranteller und eine zweite Federscheibe, welche zu diesem Zweck in der Mitte ein Loch haben, auf die Stange bis zum Anschlag aufgeschoben. Im Falle eines mit Unterdruck zu beaufschlagenden Ladedruckreglers wird außerdem vor dem Membranteller auch die Membrane aufgeschoben, welche zu diesem Zweck in ihrer Mitte ein Loch hat. Dann wird eine Mutter auf das Gewinde der Stange gedreht und mit Hilfe eines Drehmomentschraubers mit einem vorgegebenen Drehmoment angezogen. Dadurch werden die Membrane und der Membranteller zwischen den beiden Federscheiben federnd eingespannt und zugleich wird die eingespannte Membrane auf einen Dichtsitz gepreßt. Wegen der hohen Temperaturbelastung und zur Sicherstellung der Vibrations- und Schlagfestigkeit wird die Mutter noch punktuell mit der Stange verschweißt.

Für kleinere Unterdruckdosen ist anstelle einer Verschraubung auch eine Vernietung der Stange bekannt, um auf diese Weise den Membranteller und die Membrane zwischen zwei Federscheiben einzuspannen. In diesem Fall wird die Stange an ihrem Ende, wo sie die Membrane und den Membranteller aufnimmt, abgedreht, um einen Anschlag für die Anordnung aus Federscheiben, Membrane und Membranteller zu schaffen.

Der Durchmesser des Gewindeabschnittes bzw. des abgedrehten Abschnittes der Stange, auf welchem die Membrane und der Membranteller befestigt werden, ist nach unten hin dadurch begrenzt daß er die auftretenden mechanischen Belastungen aufnehmen können muß. Deshalb ist der Durchmesser der Stange vom Automobilbauer vorgegeben. Denselben Durchmesser muß nach den Vorgaben des Automobilbauers die Stange auch an ihrem anderen Ende aufweisen, mit welchem sie auf ein das Ventil einwirkt. Das führt dazu, daß die Stange in einem an die Anordnung aus der Membrane, dem Membranteller und den sie einspannenden Federscheiben angrenzenden Abschnitt einen größeren Durchmesser haben muß, z.B. einen Durchmesser von 8 mm, während die Endabschnitte einen vorgeschriebenen Durchmesser von 6 mm aufweisen müssen. Das bedeutet, daß die Stange aufwendig hergestellt werden muß, indem man zunächst von einer Stange mit einem Au-βendurchmesser von einheitlich 8 mm ausgeht, in diese dann am einen Ende ein Gewinde mit einem Basisdurchmesser von 6 mm einschneidet und die Stange dann in dem außerhalb der Dose liegenden Bereich bis zu ihrem gegenüberliegenden Ende auf einen Durchmesser von 6 mm abdrehen muß. Das ist aufwendig, zumal die Stange aus Festigkeitsgründen üblicherweise aus einem Stahl besteht, der sich spanend nur schwer bearbeiten läßt. Schließlich hat sich gezeigt, daß Schäden durch Materialermüdung, welche infolge der intensiven Beanspruchung der Stange durch Vibrationen und Schläge auftreten können, bevorzugt an jenen Stellen der Stange auftreten, wo diese einen Durchmessersprung oder ein Gewinde hat.

Der vorliegenden Erfindung liegt die Aufgabe zugrunde, den Fertigungsaufwand für Ladedruckregler der eingangs genannten Art ohne Einbuße an Betriebssicherheit, möglichst sogar mit einem Gewinn an Betriebssicherheit über eine Lebensdauer von 500.000 bis 2.000.000 Schaltungen zu vereinfachen.

Diese Aufgabe wird gelöst durch einen Ladedruckregler mit den im Anspruch 1 angegebenen Merkmalen. Eine auf demselben Erfindungsgedanken beruhende zweite Lösung ist Gegenstand des Anspruchs 2. Vorteilhafte Weiterbildungen der Erfindung sind Gegenstand der Unteransprüche.

Bei dem erfindungsgemäßen Ladedruckregler hat die am Membranteller angebrachte Stange über ihre Länge einen gleichbleibenden Durchmesser und ist stoffschlüssig unmittelbar mit dem Membranteller verbunden.

### Das hat wesentliche Vorteile:

Dadurch, daß die Stange über ihre Länge einen gleichbleibenden Durchmesser hat, werden Kerben, Materialverjüngungen und dergleichen Schwachstellen vermieden, welche im Stand der Technik Ausgangspunkt für Risse und dergleichen Ermüdungserscheinungen unter mechanischer Wechselbelastung gewesen sind. Solchen Ermüdungserscheinungen muß man nun nicht durch einen größeren Durchmesser begegnen.
Eine im Durchmesser gleichbleibende Stange ermöglicht die Erfindung dadurch, daß die Membrane und der Membranteller nicht mehr klemmschlüssig, sondern stoffschlüssig an der Stange befestigt sind.
Durch die stoffschlüssige Verbindung zwischen der Stange und dem Membranteller läßt sich das Loch im Membranteller hermetisch verschließen. Die Membrane braucht keinen Beitrag zum Abdichten dieses Loches zuliefern.
Ein Einklemmen des inneren Randes der Membrane ist entbehrlich. Ein Beschädigen der Membrane durch zu starkes Quetschen kann an dieser Stelle ausgeschlossen werden.
Federscheiben, welche im Stand der Technik zum Einspannen des Membrantellers und der Membrane dienen, sind erfindungsgemäß entbehrlich.
Ein teilweises Abdrehen der Stange ist ebenso entbehrlich wie das Einschneiden eines Gewindes in das Ende der Stange, an welchem der Membranteller befestigt wird.
Überraschenderweise genügt es, die Stange ausschließlich stoffschlüssig mit dem Membranteller zu verbinden, um die gewünschte Lebensdauer von 500.000 bis 2.000.000 Schaltungen zu erreichen.

Der Montageaufwand ist bei einem erfindungsgemäßen Ladedruckregler geringer als bei bekannten Ladedruckreglern.

Besonders preiswert läßt sich die Erfindung in die Praxis umsetzen, wenn als Stange eine Schraube, insbesondere eine Metallschraube, verwendet wird, denn Schrauben, insbesondere Metallschrauben, sind als Normteile erhältlich und können deshalb preiswert eingekauft werden.

Eine Verbindung der Stange stoffschlüssig unmittelbar mit dem Membranteller wird dadurch erleichtert, daß der Rand des ersten Loches, welches im Membranteller liegt, zu einem der Stange anliegenden Hals geformt ist. Diese vorteilhafte Weiterbildung unterscheidet sich vom Stand der Technik, in welcher der Membranteller an seiner Einspannstelle ein ebenes Gebilde ist, damit er zwischen zwei Federscheiben eingespannt werden kann. Das Formen eines Halses ist fertigungstechnisch einfach. Im Stand der Technik ist es bekannt, den Membranteller durch Tiefziehen aus einem Stahlblech zu formen. Durch entsprechende Ausgestaltung der für das Tiefziehen verwendeten Werkzeuge (Tiefziehstempel und Matrize) kann der Hals gleichzeitig mit der übrigen Formgebung des Membrantellers gezogen werden, so daß dafür kein zusätzlicher Arbeitsgang nötig ist. Statt durch Tiefziehen kann der Membranteller auch durch Warmumformen aus einem Blech geformt werden.

Vorzugsweise ist die lichte Weite für den Hals etwas kleiner gewählt als der Außendurchmesser der Stange, so daß diese nur unter Aufweiten des Halses in diesen eingeführt werden kann. Das macht es möglich, die Stange in den Hals einzupressen, so daß die Stange bereits infolge des Einpreßvorganges in dem Hals fixiert ist, der die Stange wie eine Manschette fest umschließt. Je nach Materialwahl und Abmessungen kann es beim Einpressen zu einer Verzahnung bis hin zu einer teilweisen Kaltverschweißung kommen. Bei Verwendung einer Zylinderschraube als Stange wird vorzugsweise deren zylindrischer Kopf in den Hals des Membrantellers eingepreßt.

Zum Herstellen einer dauerhaften und gut belastbaren Verbindung werden die Stange und der Membranteller, nachdem sie zusammengesteckt wurden, noch zusätzlich stoffschlüssig miteinander verbunden. Dafür kommt jede stoffschlüssige Verbindungsart infrage, die unter den geforderten Einsatzbedingungen (-35°C bis +200°C, Vibrationsbeanspruchungen und schlagende Beanspruchungen) hinreichend dauerhaft ist. Für das stoffschlüssige Verbinden kommen besonders das Schweißen und Löten infrage, wobei das Hartlöten besonders bevorzugt ist. Gängige Hartlote sind gut geeignet, den Ringspalt zwischen der Stange und dem Membranteller auszufüllen und hermetisch zu verschließen, auch wenn der Ringspalt, wie es durch die Ausbildung eines Halses am Membranteller bevorzugt ist, eine gewisse Länge hat, was die Stabilität der Verbindung und die Steifigkeit der Anordnung aus dem Membranteller und der Stange erhöht.

Die Membrane ist mit ihrem äußeren Rand zwischen dem Deckel und der Dose eingespannt. Die Membran muß das Loch im Membranteller nicht abdichten. Bei einem Ladedruckregler, bei welchem die Stange die Membran nicht durchquert, wie man es bei Ladedruckreglern kennt, welche mit Überdruck beaufschlagt werden, ist die Abdichtung durch das Einspannen ihres äußeren Randes bewirkt. Bei Ladedruckreglern, bei welchen die Stange die Membran durchquert, muß nur noch Vorsorge getroffen werden, daß die Membrane bei Druckbeaufschlagung der dem Boden der Dose zugewandten Seite des Membrantellers dicht anliegt. Dem kommt die Tatsache entgegen, daß die Membrane auf der Seite des Membrantellers liegt, auf welcher im Ladedruckregler der größere Luftdruck auftritt, so daß die Membrane durch den größeren Luftdruck gegen den Membranteller gedrückt wird. In Weiterbildung der Erfindung ist vorgesehen, daß im Membranteller, dem ersten Loch benachbart, eine das erste Loch umgebende ringförmige Vertiefung vorgesehen ist, welche den inneren Randbereich der Membrane formschlüssig aufnimmt. Durch diese spezielle Anordnung ist die Lage des inneren Randes der Membrane besonders zuverlässig fixiert, und diese Fixierung wird um so zuverlässiger, je größer der Druck ist, der auf ihr lastet. Mit zunehmendem Druck auf die Membrane steigt deren Dichtwirkung, ein höchst erwünschter Effekt.

Besonders günstig ist in diesem Zusammenhang eine Weiterbildung der Erfindung, bei welcher die Membrane ein Kunststoff-Formteil ist, dessen innerer Randbereich verdickt ausgebildet und damit besonders stabil ist. Durch die Ausbildung als Formteil kann die Kontur des inneren Randbereiches der Membrane von vornherein der Kontur der ringförmigen Vertiefung im Membranteller angepaßt werden. Das führt zu einem wirksamen Formschluss zwischen der Membrane und ihrem Membranteller und ist für die angestrebte Dichtwirkung günstig.

Besonders für große Ladedruckregler und extreme Belastungen ist eine Weiterbildung der Erfindung vorteilhaft, bei welcher das Ende der Stange über den Hals des Membrantellers vorsteht und die Stange zusätzlich zu ihrer Stützung durch den Hals des Membrantellers mit ihrem über den Hals vorstehenden Ende auch noch mittels einer gesonderten Stützscheibe an einer Wand der ringförmigen Vertiefung im Membranteller abgestützt ist. Durch eine solche zusätzliche Stützscheibe, die vorzugsweise in einem Abstand vom Halse vorgesehen ist, wird die Zuverlässigkeit und Steifigkeit der Verbindung zwischen der Stange und dem Membranteller erhöht. Dazu kann die Stützscheibe auf das Ende der Stange gepreßt sein. Vorzugsweise ist die Stützscheibe mit der Stange stoffschlüssig verbunden, ggfs. in Kombination mit einem Preßsitz. Eine stoffschlüssige Verbindung, ggfs. in Verbindung mit einem Preßsitz, wird auch zwischen der Stützscheibe und dem Membranteller bevorzugt. Eine Verbindung der Stützscheibe mit der inneren Umfangswand der ringförmigen Vertiefung im Membranteller ist besonders bevorzugt. Als stoffschlüssige Verbindung kommen auch in diesem Fall besonders das Schweißen und Löten, insbesondere das Hartlöten in Frage.

Die Stützscheibe kann eben ausgebildet sein. Besonders vorteilhaft ist es, wenn sie im Radialschnitt U-förmig gestaltet ist, weil dann Kontaktflächen zwischen der Stützscheibe einerseits und der Stange und dem Membranteller andererseits erhalten werden, die sich für eine Lötverbindung besonders gut eignen.

Bei einer Stange, welche als Zylinderschraube ausgebildet ist, erzielt man durch Einfügen des zylindrischen Kopfes in den Hals und stoffschlüssiges Verbinden des zylindrischen Kopfes der Zylinderschraube mit dem Hals des Membrantellers eine Zuverlässigkeit und Steifigkeit der Verbindung, die der mit einer zusätzlichen Stützscheibe - wie oben beschrieben - erreichbaren Zuverlässigkeit und Steifigkeit in nichts nachsteht und mit weniger Aufwand erreicht wird.

Vorzugsweise befindet sich im Boden der Dose eine die Stange umgebende Einbuchtung, welche nach innen, in Richtung zum Membranteller, gerichtet und nach außen offen ist. Diese Einbuchtung ist im Durchmesser vorzugsweise kleiner als der Außendurchmesser der im Membranteller vorgesehenen Vertiefung, in welcher der innere Rand der Membrane liegt. Das hat den Vorteil, daß der Membranteller nur mit seinem Abschnitt, welcher von der Vertiefung des Membrantellers umgeben ist, an der Einbuchtung im Boden der Dose anschlagen kann, wobei die Membrane beim Anschlagen nicht gedrückt werden kann, weil ihr innerer Rand im Abstand von der im Boden der Dose vorgesehenen Einbuchtung in der Vertiefung des Membrantellers geschützt angeordnet ist.

Die im Boden der Dose vorgesehene Einbuchtung eignet sich darüberhinaus zum Aufnehmen einer Führungsbuchse für die Stange. Diese Führungsbuchse kann aus einem geeigneten hitzebeständigen Werkstoff bestehen, z.B. aus Metall oder aus einer Keramik, aber auch aus einem Kunststoff, wenn die Einsatzbedingungen das zulassen.

Eine vorteilhafte Weiterbildung der Erfindung ist dadurch gekennzeichnet, dass die Dose oder ihr Deckel oder sowohl die Dose als auch ihr Deckel Kunststoffformteile sind. Das erlaubt eine weitere Reduzierung der Herstellkosten und ist Ausgangspunkt für weitere Vereinfachungen und Vorteile. So kann durch dickere Wände, die beim Spritzgießen preiswert erhältlich sind, aus Dose und Deckel ein besonders formstabiles Gehäuse gebildet werden. Da die Dose und der Deckel nicht mehr aus Metall bestehen, können sie nicht mehr durch einen Bördelvorgang miteinander verbunden werden. Statt dessen können sie miteinander verrastet werden. Die nötige Dichtheit zwischen Dose und Deckel wird durch das beim Verrasten erfolgende Einklemmen des Randes der Membrane erreicht. Wenn nötig, könnten die Dose und ihr Deckel zusätzlich durch Ultraschallschweißen miteinander verbunden werden.

Durch das Spritzgießen der Dose kann in der unmittelbaren Umgebung des in ihrem Boden vorgesehenen dritten Loches ein Anschlag für den Membranteller ausgebildet sein. Bei diesem Anschlag handelt es sich vorzugsweise einfach um eine Verdickung des Bodens, in welcher sich das dritte Loch befindet, durch welches sich die Stange des Ladedruckreglers hindurcherstreckt. Durch die Verdickung erhält man zugleich eine gute Führung für die Stange.

Der Verdickung des Bodens der Dose gegenüberliegend ist im Deckel vorzugsweise ebenfalls eine Verdickung ausgebildet. Sie kann sich in die Druckfeder hineinerstrecken und sie zentrieren. Die Verdickung im Deckel kann aber auch als Anschlag für den Membranteller dienen, wenn, was in einer weiteren vorteilhaften Ausführungsform des Ladedruckreglers verwirklicht ist, die Anordnung aus Membrane und Membranteller in entgegengesetzter Orientierung eingebaut ist. Zu diesem Zweck sind die Dose und der Deckel vorzugsweise gleich ausgebildet, so dass sie - ggf. nach Einlegen von passenden Einlegeteilen in die Spritzgießform, im selben Spritzgießwerkzeugsatz gefertigt werden können.

Zweckmäßigerweise springt die Verdickung im Boden der Dose ebenso nach innen vor wie die Verdickung am Deckel.

Auch der Membranteller kann vorteilhaft ein Formteil aus Kunststoff sein, welcher in der unmittelbaren Umgebung des in ihm vorgesehenen ersten Loches vorzugsweise verdickt ausgebildet ist um das Ende der Stange oder, wenn als Stange eine Schraube vorgesehen ist - den Kopf der Schraube - für eine hinreichend feste stoffschlüssige Verbindung über eine Länge von einigen Millimetern aufnehmen zu können. Das erleichtert auch das Ausrichten der Stange.

Die Stange und die Membranteller können miteinander verklebt oder miteinander verschweißt werden, z. B. mittels Ultraschall. Besonders günstig ist es das innen liegende Ende der Stange, bei Verwendung einer Schraube als Stange deren Kopf, als Einlegeteil in die Spritzgießform für den Membranteller einzulegen und beim Spritzen des Membrantellers in diesen einzubetten.

Das Material, welches für die Stange gewählt wird, hängt davon ab, mit welchen Temperaturen am Einsatzort zu rechnen ist. In den meisten Fällen wird die Stange bzw. Schraube aus Metall bestehen, könnte aber auch aus Kunststoff bestehen, wenn die Temperaturen am Einsatzort das zulassen.

Bei Verwendung einer Dose, eines Deckels und eines Membrantellers aus Kunststoff wird die Herstellung des Ladedruckreglers so billig, dass auch eine nichtstoffschlüssige Verbindung zwischen der Stange und dem Membranteller infrage kommt, wie sie eingangs erläutert wurde; es ergibt sich dennoch ein Kostenvorteil gegenüber dem Stand der Technik.

Ausführungsbeispiele der Erfindung sind in den beigefügten Zeichnungen im Längsschnitt dargestellt.
Figur 1 zeigt einen ersten Ladedruckregler mit einer Unterdruckdose aus Metall,
Figur 2 zeigt einen zweiten Ladedruckregler mit einer Unterdruckdose aus Metall,
Figur 3 zeigt einen Ladedruckregler mit einer Überdruckdose aus Metall,
Figur 4 zeigt einen Ladedruckregler mit einer Überdruckdose aus Kunststoff, in einer Seitenansicht
Figur 5 zeigt den Schnitt A-A durch den Ladedruckregler aus Figur 4, und
Figur 6 zeigt einen Ladedruckregler mit einer Unterdruckdose aus Kunststoff in einem Schnitt wie in Figur 5.

Gleiche oder einander entsprechende Teile sind in den verschiedenen Beispielen mit übereinstimmenden Bezugszahlen bezeichnet.

Der in der Zeichnung dargestellte Ladedruckregler hat eine Dose 1 mit einer zylindrischen Umfangswand 2, mit einem hauptsächlich ebenen Boden 3 und einem konischen Abschnitt 4, welcher die zylindrische Umfangswand 2 und den Boden 3 miteinander verbindet. In der Mitte des Bodens 3 befindet sich ein Loch 5 (das "dritte" Loch gemäß Anspruch 1), welches von einer zylindrischen Einbuchtung 6 umgeben ist, welche das Loch 5 konzentrisch umgibt. Die Einbuchtung 6 ragt in das Innere der Dose 1 hinein und ist nach außen hin offen. Sie nimmt eine scheibenförmige Führungsbuchse 7 auf, welche vorzugsweise aus einer Keramik besteht und mittels eines O-Ringes 8 schwingungsgedämpft in der Einbuchtung 6 gelagert ist. Ein abgewinkelter Halter 9 hat ein ebenes Fußteil 10, welches der Außenseite des Bodens 3 anliegt, die Einbuchtung 6 und die darin liegende Führungsbuchse 7 überdeckt und fest mit dem Boden 3 verbunden ist. Dadurch sind die Führungsbuchse 7 und der O-Ring 8 unverlierbar gefangen.

Zum Verschließen der Dose 1 ist ein Deckel 11 vorgesehen, welcher eine zylindrische Umfangswand 12 und eine profilierte Endwand 13 hat. Die Profilierung der Endwand 13 ist so gewählt, daß sie in der Mitte eine konische Einziehung 14 und eine die konische Einziehung 14 umgebende ringförmige Einziehung 15 hat, welche weniger tief ist als die konische Einziehung 14.

Der Deckel 11 hat an seinem Rand einen nach außen abstehenden Bördelflansch 16 und die Dose 1 hat an ihrem äußeren Rand einen nach außen abstehenden Bördelflansch 17. Durch einen Bördelvorgang, nämlich durch Umlegen des Bördelflansches 17 um den Bördelflansch 16, sind die Dose 1 und ihr Deckel 11 fest miteinander verbunden. Dabei ist zwischen den beiden Bördelflanschen 16 und 17 der verdickte äußere Rand 18 einer flexiblen Membrane 19 fest und luftdicht eingespannt. Die Membrane 19 ist ein Kunststoff-Formteil, welches für den Einsatz bei Temperaturen von -35°C bis +200°C ausgelegt ist und insbesondere aus einem Fluorsilikonkunststoff besteht. Die Membrane 19 ist ein topfförmiges Formteil, und hat in der Mitte ihres Bodens 20 ein Loch 21 (das "zweite" Loch gemäß Anspruch 1), welches von einem verdickten inneren Rand 22 begrenzt wird.

Die Membrane 19 liegt einem entsprechend topfförmig gestalteten Membranteller 23 an, der eine schwach konische Umfangswand 24 und einen hauptsächlich ebenen Boden 25 hat, in dessen Mitte sich ein Loch 26 (das "erste" Loch gemäß Anspruch 1) befindet, welches durch einen zu einem Hals 27 eingezogenen inneren Rand des Membrantellers 23 begrenzt wird. Der Hals 27 ist zunächst von einer ebenen Ringfläche 28 und dann von einer ringförmigen Vertiefung 29 des Bodens 25 umgeben, in welcher der innere, verdickte Rand 22 der Membrane 19 liegt. Die Formgebung der ringförmigen Vertiefung 29 und die Formgebung des in der Vertiefung 29 liegenden inneren Abschnittes der Membrane 19 sind so aufeinander abgestimmt, daß sie formschlüssig ineinander greifen.

Die Dose 1, der Deckel 11 und der Membranteller 23 sind vorzugsweise aus Blech, insbesondere aus einem Stahlblech gezogene, insbesondere tiefgezogene, Formteile. Auch der Halter 9 besteht zweckmäßigerweise aus Stahl.

Die Dose 1, der Deckel 11, die Membrane 19 und der Membranteller 23 sind so ausgebildet, daß sie durch Drehen um beliebige Winkel um die Achse 35 der zylindrischen Umfangsflächen 2 und 12 in sich selbst überführt werden. Die Achse 35 ist zugleich die Längsachse der Stange 31.

In der Mitte der konischen Einziehung 14 ist ein Loch vorgesehen, in welchem ein Röhrchen 34 steckt, durch welches der Raum zwischen dem Deckel 11 und der Membrane 19 an eine Unterdruckquelle angeschlossen werden kann. Tritt in dem Raum zwischen dem Deckel 11 und der Membrane 19 ein Unterdruck auf, bewegt sich die Membrane 19 und mit ihr der Membranteller 23 in Richtung zum Deckel 11 gegen die Kraft einer Druckfeder 30, welche zwischen dem Deckel 11 und dem Membranteller 23 eingespannt ist. Es handelt sich bei der Druckfeder 30 um eine Wendelfeder, deren eines Ende in einem Ringspalt zwischen der konischen Einziehung 14 und der ringförmigen Einziehung 15 liegt und dessen anderes Ende die ringförmige Vertiefung 29 umgibt, so daß die Druckfeder 30 radial nicht ausweichen kann.

Die Bewegung des Membrantellers 23 überträgt sich auf eine gerade Stange 31, welche aus einem Metall, insbesondere aus Stahl besteht und über ihre Länge einen gleichbleibenden Durchmesser hat. Mit ihrem einen Ende steckt sie in dem Hals 27 und ragt ein Stück weit darüberhinaus in den Raum zwischen dem Membranteller 23 und dem Deckel 11 hinein. Der Hals 27 des Membrantellers 23 umschließt die Stange 31 fest und ist mit ihr durch Schweißen oder Löten verbunden, insbesondere durch Hartlöten. In einem Abstand vom Hals 27 ist zwischen dem Ende der Stange 31 und der inneren Begrenzungswand 32 der ringförmigen Vertiefung 29 ein im Radialschnitt U-förmiger Stützring 36 angeordnet, welcher einerseits mit der Stange 31 und andererseits mit der inneren Begrenzungswand 32 der ringförmigen Vertiefung 29 verschweißt oder verlötet, insbesondere durch Hartlöten verbunden ist. Die Stange 31 führt durch das Loch 5 im Boden der Dose 1 und durch ein im Fuß 10 des Halters 9 vorgesehenes viertes Loch 33 ins Freie. Das Loch 5 ist das "dritte" Loch gemäß Anspruch 1. Das andere Ende der Stange 31 dient dazu, in an sich bekannter Weise ein Ventil eines Turboladers zu betätigen.

Auf der dem Membranteller 23 abgewandten Seite der Membrane 19 lastet stets der Umgebungsluftdruck, während die gegenüberliegende Seite der Membrane 19 durch Anschließen einer Unterdruckquelle an das Röhrchen 29 mit einem Unterdruck beaufschlagt werden kann. Auf diese Weise preßt der Normaldruck die Membrane 19 gegen den Membranteller 23 und insbesondere den verdickten inneren Rand 22 und den daran anschließenden inneren Bereich der Membrane 19 fest, formschlüssig und dicht in die ringförmige Vertiefung 29.

Wird der Unterdruck abgebaut, drückt die Feder 30 den Membranteller 23 gegen die Einbuchtung 6 des Bodens 3 der Dose 1, ohne daß dabei die Membrane 19 gequetscht oder gar beschädigt werden könnte. Die Einbuchtung 6 und die darin gefangene Führungsbuchse 7 stabilisieren den Boden 3, so daß diese dem Anschlagen des Membrantellers 23 am Boden 3 der Dose 1 widerstehen kann.

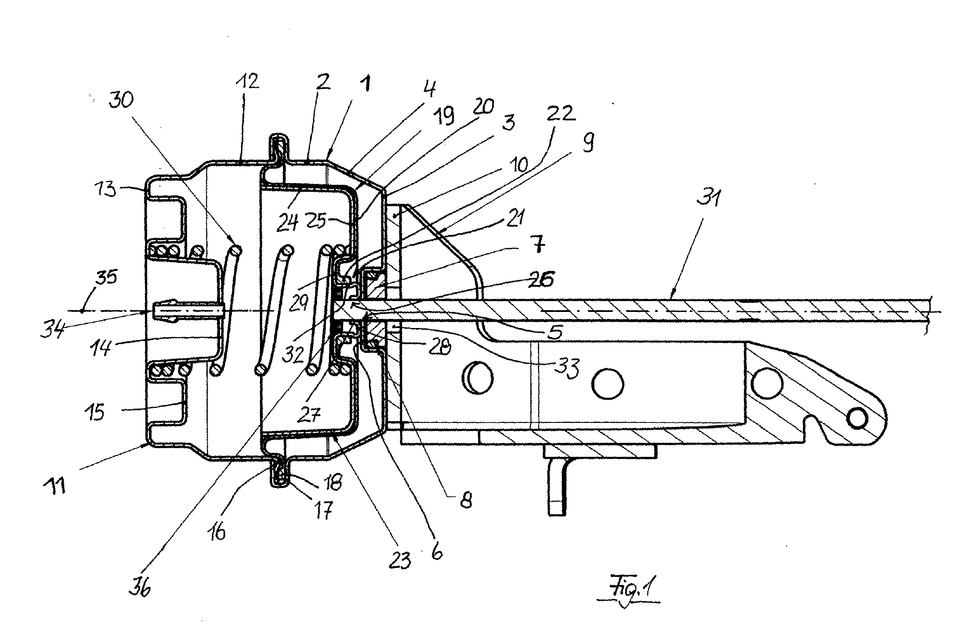

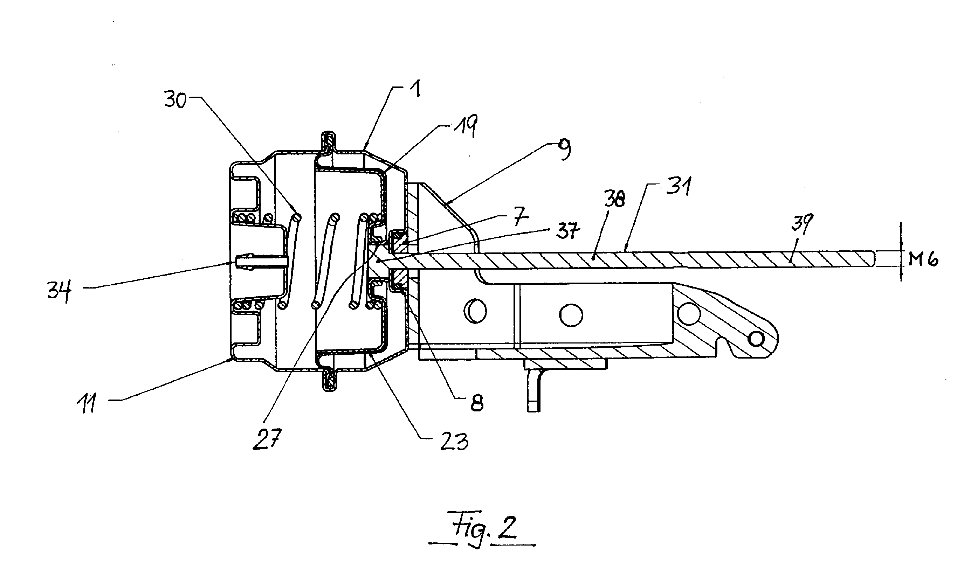

Das in Figur 2 dargestellte Ausführungsbeispiel unterscheidet sich von dem in Figur 1 dargestellten Ausführungsbeispiel darin, daß als Stange 31 eine Metallschraube vorgesehen ist, welche einen zylindrischen Kopf 37, einen Schaft 38 und einen Gewindeteil 39 hat. Es handelt sich dabei vorzugsweise um eine Zylinderschraube mit dem Durchmesser M6. Der zylindrische Kopf 37 steckt in einem als Hals 27 ausgebildeten ersten Loch 26 im Membranteller 23. Das Vorsehen eines Stützrings 36 wie im ersten Ausführungsbeispiel erübrigt sich dadurch im zweiten Ausführungsbeispiel. Der Kopf 37 ist mit dem Hals 27 verlötet oder verschweißt und bildet auf diese Weise eine steife Verbindung zwischen der Stange 31 und dem Membranteller 23.

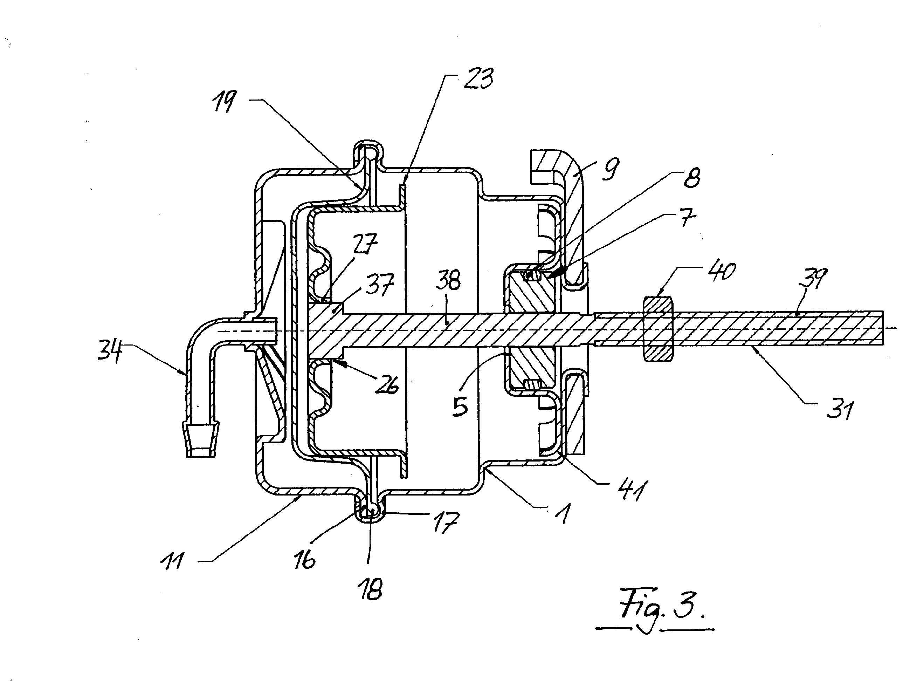

Die in den Figuren 1 und 2 dargestellten Ausführungsbeispiele zeigen einen Ladedruckregler mit einer Unterdruckdose. Im Gegensatz dazu zeigt das Ausführungsbeispiel in Figur 3 einen Ladedruckregler mit einer Überdruckdose. Er unterscheidet sich - abgesehen von einer unterschiedlichen Kontur der Dose und des Membrantellers - von dem in Figur 2 dargestellten Ausführungsbeispiel im wesentlichen darin, daß die Membran 19 auf der anderen Seite des Membrantellers 23 liegt, so daß die Stange 31, welche auch in diesem Fall eine Metallschraube ist, welche als Zylinderschraube ausgebildet ist, die Membrane 19 nicht durchqueren muß. Die Membrane 19 dichtet den Deckel 11 gegenüber der Dose 1 alleine dadurch ab, daß sie mit ihrem äußeren Rand zwischen den beiden Bördelflanschen 16 und 17 eingespannt ist. Das Röhrchen 34, durch welches die Membrane 19 mit einem Überdruck beaufschlagt wird, ist um 90° abgebogen. Auf den Gewindeteil 39 der Zylinderschraube ist eine Sechskantmutter 40 gedreht. Am Boden 20 der Dose 1 ist ein Federteller 41 befestigt, dessen äußerer Rand gegen den Membranteller 23 weisend gebogen ist, um das eine Ende einer gewendelten Druckfeder aufzunehmen, die zwischen dem Federteller 41 und dem Membranteller 23 eingespannt ist und - entsprechend der Druckfeder 30 in den ersten beiden Ausführungsbeispielen - den Membranteller 23 zurückzustellen. Im mittleren Bereich des Federtellers 41 ist eine Ausnehmung vorgesehen, welche eine Führungsbuchse 7 und einen O-Ring 8 aufnimmt, die die selbe Aufgabe haben wie die entsprechenden Teile in den beiden anderen Ausführungsbeispielen.

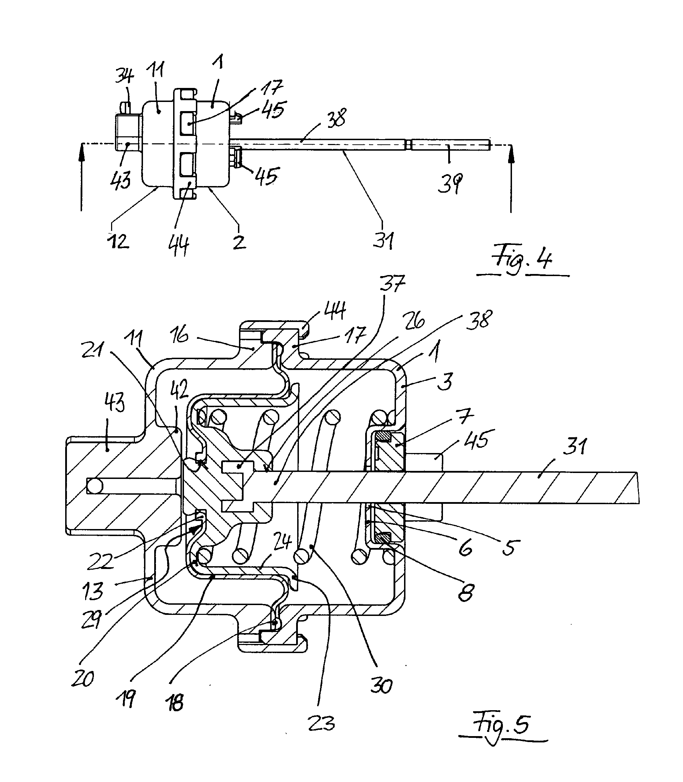

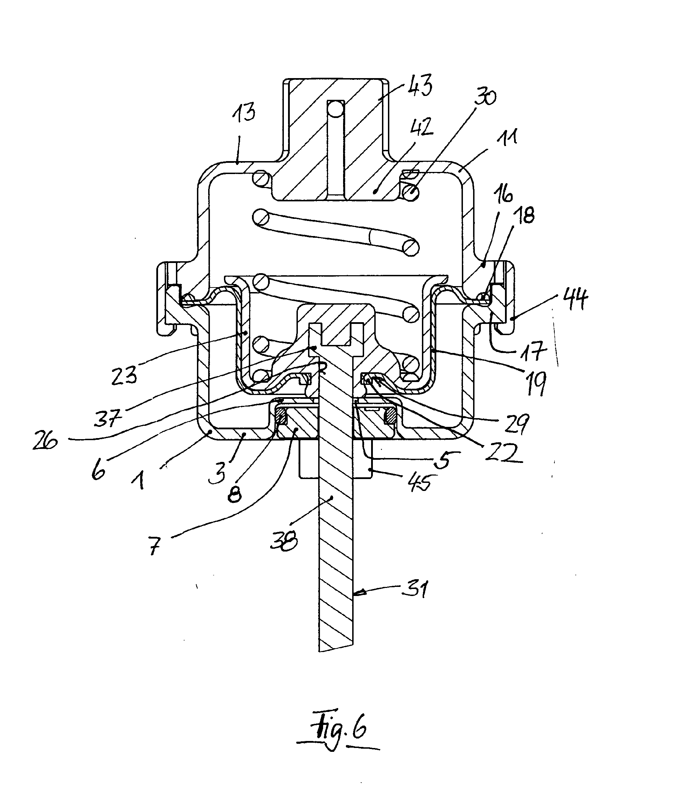

Das in den Figuren 4 und 5 dargestellte Ausführungsbeispiel unterscheidet sich von dem in Figur 2 dargestellten Ausführungsbeispiel im wesentlichen darin, dass die Dose 1 und der Deckel 11 nicht aus Metall bestehen, sondern durch Spritzgießen aus Kunststoff geformt sind. Sie sind deshalb dickwandiger als die Dose 1 und der Deckel 11 in Figur 2. Da man die aus Kunststoff bestehende Dose 1 nicht bördeln kann, sind die Dose 1 und ihr Deckel 11 nicht durch einen Bördelflansch verbunden. Statt dessen sind der Dose 1 und dem Deckel 11 Flansche 16 und 17 angeformt, welche durch Rastelemente miteinander verrastet werden können und dabei den verdickten äußeren Rand 18 der Membrane 19 zwischen sich einklemmen. Bei den Rastelementen handelt es sich im dargestellten Beispiel um einen am Deckel 11 vorgesehenen Kranz von Rasthaken 44, welche hinter den Flansch 17 der Dose 1 greifen. Falls gewünscht, kann die Verbindung der beiden Flansche 16 und 17 zusätzlich durch Verkleben oder durch Ultraschallschweißen gesichert werden.

Der Führungsbuchse 7 gegenüberliegend ist eine Verdickung 42 am Deckel 11 ausgebildet, welche in die Druckfeder 30 eintaucht und sie führt.

Auch der Membranteller 23 ist in diesem Ausführungsbeispiel ein Kunststoff-Formteil mit einer das im Membranteller 23 vorgesehene erste Loch 26 umgebenden Vertiefung 29, in welcher der verdickte innere Rand 22 der Membrane 19 formschlüssig aufgenommen ist und der Kopf 37 und ein Teil des Schaftes 38 der als Schraube ausgebildeten Stange 31 durch Umspritzen eingebettet ist.

Dem Deckel ist ein Ansatz 43 mit einem Röhrchen 34 angeformt, mit welchem das Innere der Dose 1 mit Druck beaufschlagt werden kann.

Der in den Figuen 4 und 5 dargestellte Ladedruckregler ist so aufgebaut, dass die Membran 19 und der Membranteller 23 auch umgekehrt eingebaut werden können, wie in Figur 6 dargestellt. In diesem Fall ist die Stange 31 umgekehrt in den Membranteller 23 eingebettet und der Ladedruckregler spricht nicht, wie in Figur 4, auf Überdruck, sondern auf Unterdruck an, mit welchem der Ladedruckregler durch das Röhrchen 34 beaufschlagt ist.

Bei den in den Figuren 5 bis 6 dargestellten Beispielen kann die in Figur 2 in einer Einbuchtung des Bodens 3 der Dose 1 vorgesehene Führungsbuchse 7 auch entfallen. Sie könnte durch eine das dritte Loch 5 umgebenden Verdickung des Bodens 20 ersetzt werden, wodurch auf preiswerte Weise zugleich eine gute Führung für den Schaft 38 der Metallschraube 31 und ein massiver Anschlag für ihren Kopf 37 gebildet ist. Am Boden 3 der Dose 1 sind drei Haken 45 angespritzt, mit welchen der Ladedruckregler im Automobil montiert werden kann. Die Haken 45 ersetzen den Halter 9 aus den Figuren 1 bis 3.

### Bezugszahlenliste:

- 1: Dose
- 2: zylindrische Umfangswand
- 3: ebener Boden
- 4: Abschnitt
- 5: drittes Loch
- 6: Einbuchtung
- 7: Führungsbuchse
- 8: O-Ring
- 9: Halter
- 10: Fußteil
- 11: Deckel
- 12: Umfangswand
- 13: Endwand
- 14: konische Einziehung
- 15: ringförmige Einziehung
- 16: Bördelflansch, Flansch
- 17: Bördelflansch, Flansch
- 18: äußere Rand
- 19: Membrane
- 20: Boden
- 21: zweites Loch
- 22: innerer Rand
- 23: Membranteller
- 24: konische Umfangswand
- 25: ebener Boden
- 26: erstes Loch
- 27: Hals
- 28: Ringfläche
- 29: Vertiefung
- 30: Druckfeder
- 31: Stange
- 32: innere Begrenzungswand
- 33: viertes Loch
- 34: Röhrchen
- 35: Achse
- 36: Stützring
- 37: Kopf
- 38: Schaft
- 39: Gewindeteil
- 40: Sechskant
- 41: Federteller
- 42: Verdickung am Deckel 11
- 43: Ansatz am Deckel 11
- 44: Rasthaken
- 45: Haken

## Patentansprüche

1. Ladedruckregler für Abgas-Turbolader von Brennkraftmotoren für Automobile
- mit einer Dose (1), welche eine Umfangswand (2), einen Boden (3), einen Deckel (11) und eine zwischen dem Deckel (11) und der Dose (1) eingespannte flexible Membrane (19) aufweist, welche einer dem Boden (3) zugewandten Seite eines Membrantellers (23) anliegt, wobei die Dose (1) eine Achse (35) hat, welche von der Umfangswand (2) umgeben ist und den Deckel (11) und den Boden (3) durchquert,
- mit einem am Deckel (11) vorgesehenen Anschluß (34) für eine Druck- oder Unterdruckquelle, welcher in den Raum zwischen dem Deckel (11) und der Membrane (19) mündet,
- mit einer zwischen dem Deckel (11) und dem Membranteller (23) eingespannten Druckfeder (30),
- mit einem in der Mitte des Membrantellers (23) vorgesehenen ersten Loch (26),
- ggf. mit einem in der Mitte der Membrane (19) vorgesehenen zweiten Loch (21),
- mit einem in der Mitte des Bodens (3) der Dose (1) vorgesehenen dritten Loch (5),
- und mit einer Stange (31), welche sich in Richtung der Achse (35) erstreckt und deren eines Ende fest mit dem Membranteller (23) verbunden ist und zu diesem Zweck in dem ersten Loch (26) steckt und durch das dritte Loch (5) und ggf. durch das zweite Loch (21) aus der Dose (1) herausgeführt ist, **dadurch gekennzeichnet, daß** die Stange (31) über ihre Länge einen gleichbleibenden Durchmesser hat und stoffschlüssig unmittelbar mit dem Membranteller (23) verbunden ist.

2. Ladedruckregler für Abgas-Turbolader von Brennkraftmotoren für Automobile
- mit einer Dose (1), welche eine Umfangswand (2), einen Boden (3), einen Deckel (11) und eine zwischen dem Deckel (11) und der Dose (1) eingespannte flexible Membrane (19) aufweist, welche einer dem Boden (3) zugewandten Seite eines Membrantellers (23) anliegt, wobei die Dose (1) eine Achse (35) hat, welche von der Umfangswand (2) umgeben ist und den Deckel (11) und den Boden (3) durchquert,
- mit einem am Deckel (11) vorgesehenen Anschluß (34) für eine Druck- oder Unterdruckquelle, welcher in den Raum zwischen dem Deckel (11) und der Membrane (19) mündet,
- mit einer zwischen dem Deckel (11) und dem Membranteller (23) eingespannten Druckfeder (30),
- mit einem in der Mitte des Membrantellers (23) vorgesehenen ersten Loch (26),
- ggf. mit einem in der Mitte der Membrane (19) vorgesehenen zweiten Loch (21),
- mit einem in der Mitte des Bodens (3) der Dose (1) vorgesehenen dritten Loch (5),
- und mit einer Stange (31), welche sich in Richtung der Achse (35) erstreckt und deren eines Ende fest mit dem Membranteller (23) verbunden ist und zu diesem Zweck in dem ersten Loch (26) steckt und durch das dritte Loch (5) und ggf. durch das zweite Loch (21) aus der Dose (1) herausgeführt ist, **daedurch gekennzeichnet, daß** die Stange (31) eine Schraube, insbesondere eine Metallschraube ist, welche stoffschlüssig unmittelbar mit dem Membranteller (23) verbunden ist.

3. Ladedruckregler nach Anspruch 2, **dadurch gekennzeichnet, daß** die Schraube als Zylinderschraube ausgebildet ist.

4. Ladedruckregler nach Anspruch 3, **dadurch gekennzeichnet, daß** es der zylindrische Kopf der Stange (31) ist, welcher stoffschlüssig mit dem Membranteller (23) verbunden ist.

5. Ladedruckregler nach einem der vorstehenden Ansprüche, **dadurch gekennzeichnet, daß** die Stange (31) ausschließlich stoffschlüssig mit dem Membranteller (23) verbunden ist.

6. Ladedruckregler nach einem der vorstehenden Ansprüche, **dadurch gekennzeichnet, daß** der Rand des ersten Loches (26) im Membranteller (23) zu einem der Stange (31) anliegenden Hals (27) geformt ist.

7. Ladedruckregler nach Anspruch 6, **dadurch gekennzeichnet, daß** die Stange (31) in den Hals (27) eingepreßt ist.

8. Ladedruckregler nach einem der vorstehenden Ansprüche, **dadurch gekennzeichnet, daß** im Membranteller (23), dem ersten Loch (26) benachbart, eine das erste Loch (26) umgebende ringförmige Vertiefung (29) vorgesehen ist, in welcher der das Loch (21) in der Membrane (19) begrenzende innere Randbereich der Membrane (19) formschlüssig aufgenommen ist.

9. Ladedruckregler nach Anspruch 8, **dadurch gekennzeichnet, daß** die Membrane (19) ein Kunststoff-Formteil ist, dessen innerer Randbereich (22) verdickt ausgebildet ist.

10. Ladedruckregler nach einem der vorstehenden Ansprüche in Verbindung mit den Ansprüchen 6 und 9, **dadurch gekennzeichnet, daß** das Ende der Stange (31) über den Hals (27) des Membrantellers (23) vorsteht und daß die Stange (31) zusätzlich zu ihrer Stützung durch den Hals (27) des Membrantellers (23) mit ihrem über den Hals (27) vorstehenden Ende auch noch mittels eines Stützrings (36) an einer Wand (32) der ringförmigen Vertiefung (29) im Membranteller (23) abgestützt ist.

11. Ladedruckregler nach Anspruch 10, **dadurch gekennzeichnet, daß** der Stützring (36) mit seinem äußeren Rand an einer inneren Umfangswand (32) der ringförmigen Vertiefung (29) im Membranteller (23) abgestützt ist.

12. Ladedruckregler nach Anspruch 10 oder 11, **dadurch gekennzeichnet, daß** der Stützring (36) stoffschlüssig mit dem über den Hals (27) des Membrantellers (23) vorstehenden Ende der Stange (31) und/oder mit dem Membranteller (23) stoffschlüssig verbunden ist.

13. Ladedruckregler nach einem der Ansprüche 10 bis 12, **dadurch gekennzeichnet, daß** der Stützring (36) im Radialschnitt U-förmig gestaltet ist.

14. Ladedruckregler nach einem der vorstehenden Ansprüche, **dadurch gekennzeichnet, daß** der Membranteller (23) metallisch ausgebildet ist.

15. Ladedruckregler nach Anspruch 14, **dadurch gekennzeichnet, daß** die stoffschlüssige Verbindung eine Hartlötverbindung ist.

16. Ladedruckregler nach einem der vorstehenden Ansprüche in Verbindung mit Anspruch 7, **dadurch gekennzeichnet, daß** im Boden (3) der Dose (1) eine die Stange (31) umgebende Einbuchtung (6) vorgesehen ist, welche in die Dose (1) hineinragt und nach außen hin offen ist, und daß diese Einbuchtung (6) einen kleineren Durchmesser hat als den äußeren Durchmesser der im Membranteller (23) vorgesehenen ringförmigen Vertiefung (29).

17. Ladedruckregler nach einem der vorstehenden Ansprüche, **dadurch gekennzeichnet, daß** die Dose (1) die Membrane (19) und der Membranteller (23) die Gestalt eines Rotationskörpers mit der Achse (35) als Rotationsachse haben.

18. Ladedruckregler nach einem der vorstehenden Ansprüche, **dadurch gekennzeichnet, daß** die Dose (1) und/oder ihr Deckel (11) Kunststoffformteile sind.

19. Ladedruckregler nach Anspruch 18, **dadurch gekennzeichnet, daß** die Dose (1) und ihr Deckel (11) miteinander verrastet sind.

20. Ladedruckregler nach Anspruch 18 oder 19, **dadurch gekennzeichnet, daß** die Dose (1) in der unmittelbaren Umgebung des in ihrem Boden (3) vorgesehenen dritten Loches (5) einen ersten Anschlag für den Membranteller (23) aufweist, welcher als eine Verdickung des Bodens (3) ausgebildet ist.

21. Ladedruckregler nach Anspruch 18, 19 oder 20, **dadurch gekennzeichnet, daß** der Deckel (11) mittig einen zweiten Anschlag aufweist, welcher als Verdickung (42) des Deckels (11) ausgebildet ist.

22. Ladedruckregler nach Anspruch 20 oder 21, **dadurch gekennzeichnet, daß** die Verdickung (42) nach innen vorspringt.

23. Ladedruckregler nach einem der Ansprüche 1 bis 13 und 16 bis 22, **dadurch gekennzeichnet, daß** der Membranteller (23) ein Formteil aus Kunststoff ist.

24. Ladedruckregler nach Anspruch 23, **dadurch gekennzeichnet, daß** der Membranteller (23) in der unmittelbaren Umgebung des in ihm vorgesehenen ersten Loches (26) verdickt ausgebildet ist.

25. Ladedruckregler nach Anspruch 24, **dadurch gekennzeichnet, daß** der Membranteller (23) wahlweise so in das aus der Dose (1) und dem Deckel (11) gebildete Gehäuse eingebaut werden kann, daß die Membran (19) entweder dem Boden (3) der Dose (1) oder dem Deckel (11) zugewandt ist.

26. Ladedruckregler nach einem der vorstehenden Ansprüche, **dadurch gekennzeichnet, daß** die Stange (31) aus Metall besteht.

27. Ladedruckregler nach einem der Ansprüche 1 bis 25, **dadurch gekennzeichnet, daß** die Stange (31) aus Kunststoff besteht.

28. Ladedruckregler nach einem der vorstehenden Ansprüche in Verbindung mit Anspruch 18, **dadurch gekennzeichnet, daß** die stoffschlüssige Verbindung der Stange (31) mit dem Membranteller (23) durch eine mechanische Verbindung ersetzt ist.
